# FASCICULE DE BREVET EUROPEEN

(11) **EP 2 063 095 B1**
(45) Date de publication et mention de la délivrance du brevet: **20.05.2015**
(21) Numéro de dépôt: 08169654.4
(22) Date de dépôt: 21.11.2008
(51) Int. Cl.: F02K 1/12, F02K 1/46, F02K 3/06, F02K 1/10

(54) **Tuyère de soufflante à section réglable**
Fandüse mit verstellbarem Durchmesser
Fan nozzle with adjustable cross-section

(30) Priorité: 23.11.2007 FR 0759252
(43) Date de publication de la demande: 27.05.2009
(73) Titulaire: SNECMA, 75015 Paris (FR)
(72) Inventeur: Dijoud, Delphine, Edith, 75014 Paris (FR); Fauvelet, Benoît, Marc, Michel, 77590 Bois Le Roi (FR); Vincent, Thomas, Alain, Christian, 91120 Palaiseau (FR)
(74) Mandataire: Intès, Didier Gérard André

(56) Documents cités:
- EP-A- 1 367 249
- EP-A- 1 612 416
- US-A1- 2002 125 340

## Description

L'invention se rapporte au turboréacteur à double flux et concerne plus particulièrement un perfectionnement à une tuyère de soufflante permettant d'adapter la section de sortie de cette tuyère, en fonction du régime de fonctionnement.

On sait qu'il est possible d'améliorer les performances et/ou réduire le niveau de bruit d'un turboréacteur en faisant varier la section du flux d'air de la soufflante en fonction des conditions de vol. Ainsi, si on considère la section normalement adaptée au régime de croisière, on obtient un gain de performance au décollage ou à l'atterrissage en réduisant cette section. Dans ce but, il est connu de disposer des volets en couronne, près du bord de fuite de la tuyère, ces volets étant mobiles et commandés pour se rétracter vers l'axe du turboréacteur, en réduisant ainsi la section du flux d'air s'écoulant dans la soufflante. Les volets sont généralement actionnés par des vérins, ce qui alourdit considérablement le mécanisme.

Le document US 2006/0101803 décrit une tuyère dont le bord de fuite est muni de panneaux en chevrons, déformables, comportant intérieurement des tendons à mémoire de forme dont la courbure est déterminée par la température. La courbure imposée par les tendons (qui dépend de leur température) se transmet aux panneaux. Les moyens de commande, électriques, sont plus simples et plus légers mais la structure d'un tel panneau reste complexe.

Les documents EP 1 367 249 et EP 1 612 416 décrivent d'autres exemples de panneaux déformables pour une telle tuyère. En particulier EP 1 367 249 décrit une structure bilame à mémoire de forme.

L'invention vise un autre type de panneau déformable.

Plus particulièrement, l'invention concerne une tuyère de soufflante à section réglable selon la revendication 1 annexée, comprenant une couronne de panneaux déformables agencés à proximité de son bord de fuite, caractérisée en ce que chaque panneau a une structure du type bilame à deux matériaux présentant des coefficients de dilatation différents et en ce que des moyens de chauffage commandés sont thermiquement couplés à l'ensemble des panneaux.

Plus précisément, on peut utiliser une structure lamifiée composée de deux matériaux présentant des coefficients de dilatation différents et un dispositif de chauffage électrique.

Selon un mode de réalisation actuellement préféré, chaque panneau comporte une lame en matériau thermiquement isolant, interne et au moins une lame métallique externe. Les deux lames sont assemblées l'une contre l'autre de sorte que la différence d'élongation (parallèlement à l'axe de la tuyère) des deux lames, sous l'effet d'une élévation de température, entraîne une courbure du panneau dans un sens tendant à réduire la section d'écoulement à la sortie de la tuyère.

Le matériau thermiquement isolant peut être un matériau composite, par exemple à base de carbone.

Selon un mode de réalisation possible, le chauffage des panneaux peut être réalisé par un ensemble de résistances électriques. Ces résistances sont réparties sur les surfaces des lames métalliques (avec interposition d'un isolant diélectrique) en contact thermique avec elles. Ainsi, la commande simultanée des panneaux est obtenue en injectant un courant électrique dans le réseau de résistances.

Selon un mode de réalisation possible, chaque panneau a une forme sensiblement trapézoïdale. Ainsi, les panneaux en se courbant sous l'effet de l'élévation de température, viennent pratiquement bord à bord, sans recouvrement.

Avantageusement, les panneaux sont montés dans l'épaisseur d'un espace annulaire défini dans la paroi de la tuyère en sorte qu'ils ne perturbent pas l'écoulement du flux d'air, en régime de croisière. Plus particulièrement, ces panneaux peuvent se situer dans la continuité de la ou surface aérodynamique interne de la tuyère lorsque les moyens de chauffage commandés ne sont pas en service.

L'invention concerne aussi tout turboréacteur à double flux équipé d'une tuyère de soufflante selon la définition qui précède.

L'invention et d'autres avantages de celle-ci apparaîtront plus clairement à la lumière de la description qui va suivre d'un mode de réalisation possible d'une tuyère de soufflante à section réglable conforme à son principe, donnée uniquement à titre d'exemple et faite en référence aux dessins annexés, dans lesquels :
- la figure 1 est une vue partielle en perspective, avec arrachement, de l'arrière d'une tuyère de soufflante conforme à l'invention ;
- la figure 2 est une vue schématique en perspective d'un panneau déformable ;
- la figure 3 est une vue en coupe de ce panneau représenté en place dans une cavité de la paroi de la tuyère ; et
- la figure 4 est un schéma illustrant les moyens de chauffage électriques commandés susceptibles de provoquer la déformation des panneaux.

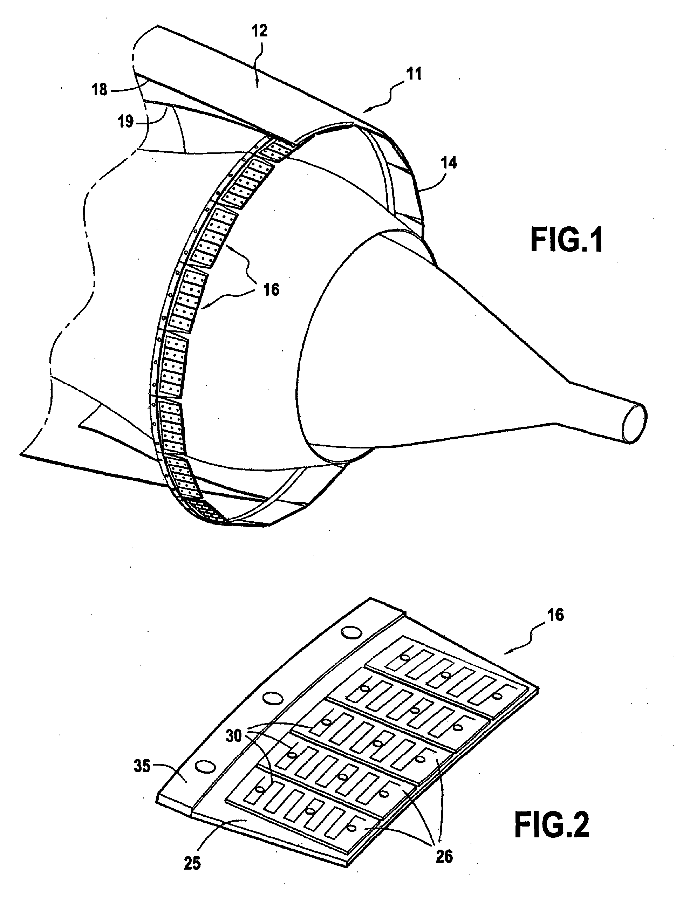

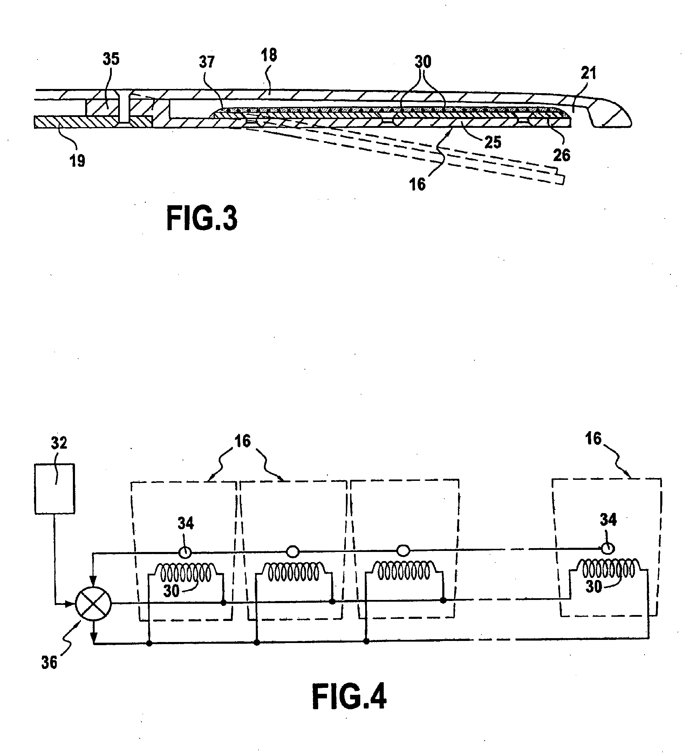

Sur la figure 1, on a représenté la partie arrière de la nacelle 11 d'un turboréacteur double flux et notamment la structure de la tuyère annulaire 12 de la soufflante. Cette tuyère présente un bord de fuite 14 au voisinage duquel sont agencés des panneaux déformables 16 disposés en couronne. La paroi extérieure de la tuyère de soufflante se compose de deux enveloppes annulaires 18, 19 se rejoignant à l'arrière en formant une cavité annulaire 21 (voir figure 3) dans laquelle sont logés les panneaux déformables 16.

Selon une caractéristique importante de l'invention, chaque panneau 16 a une structure du type bilame à deux matériaux présentant des coefficients de dilatation différents. Pour chaque panneau 16, on distingue une lame interne 25 en matériau thermiquement isolant, interne, à faible coefficient de dilatation et au moins une lame métallique 26 externe. La lame 25 peut être en matériau composite par exemple à base de carbone. Ces lames sont assemblées l'une contre l'autre par collage et/ou rivetage. On peut remplacer le collage par un brasage carbone/métallique, connu en soi. Plus précisément, chaque panneau comporte avantageusement plusieurs lames métalliques 26 associées à une même lame de matériau thermiquement isolant. Les lames métalliques 26 sont disposées côte à côte et faiblement espacées dans le sens circonférentiel, la lame 25 de matériau thermiquement isolant leur servant de support commun. Comme le montre la figure 2, les lames métalliques sont notamment rivetées sur la lame en matériau thermiquement isolant et à faible coefficient de dilatation. De cette façon, la dilatation des lames métalliques n'a aucun effet dans le sens circonférentiel. En revanche, en direction axiale, la dilatation des lames métalliques, plus importante que celle de la lame en matériau thermiquement isolant se traduit par une courbure du panneau qui pénètre dans la veine en ressortant de la cavité annulaire 21. Les panneaux sont dans la continuité de la ou surface aérodynamique interne lorsque les moyens de chauffage commandés ne sont pas activés, comme représenté figure 3.

Chaque panneau a une forme sensiblement trapézoïdale. Ainsi, lorsque les panneaux se rétractent en s'engageant dans la veine du flux d'air de la soufflante, ils "reconstituent" une virole de ladite tuyère en venant pratiquement bord à bord, sans recouvrement ou arc-boutement.

En outre, des moyens de chauffage commandés sont thermiquement couplés à l'ensemble des panneaux. Plus particulièrement ici, ces moyens de chauffage comportent des résistances électriques 30 réparties au-dessus des surfaces des lames métalliques 26 (à l'extérieur) et en contact thermique avec elles, avec interposition d'un isolant diélectrique mince. Ces résistances électriques peuvent être des dépôts résistifs, des fils électriques résistants collés, etc.

Comme le montre la figure 4, les résistances électriques 30 associées à chaque panneau ou même à chaque lame métallique sont électriquement connectées en parallèle et reliées à une source d'alimentation en courant 32. En outre, chaque panneau porte un capteur de déplacement 34 permettant d'évaluer la flexion des panneaux. Les signaux émis par ces capteurs sont exploités dans une boucle d'asservissement 36 pour déterminer la valeur du courant injecté dans les résistances pour obtenir la flexion voulue des panneaux.

Comme représenté sur la figure 3, chaque lame 25 composite est pourvue d'un talon 35 d'épaisseur prédéterminée. L'ensemble de ces talons forme une entretoise annulaire déterminant l'écartement entre l'enveloppe interne 19 et l'enveloppe externe 18 de la paroi de la tuyère. Il est à noter que les lignes aérodynamiques externes de la tuyère ne sont pas modifiées. Les panneaux rétractés à l'intérieur de la cavité annulaire 21 ne perturbent pas la continuité des lignes aérodynamiques internes.

On peut prévoir une couche isolante supplémentaire 37 recouvrant l'extérieur des panneaux 16 pour limiter les pertes thermiques vers l'extérieur et par conséquent pour réduire la consommation électrique du système de commande par résistances.

## Revendications

1. Tuyère de soufflante à section réglable comprenant une couronne de panneaux (16) déformables agencés à proximité de son bord de fuite,
dans laquelle chaque panneau (16) comporte une structure du type bilame comprenant une lame (25) en matériau thermiquement isolant, interne, et au moins une lame métallique (26) externe, lesdits lames présentant des coefficients de dilatation différents et étant assemblées l'une contre l'autre pour qu'une variation de température induise une déformation de ladite structure du type bilame provoquée par la différence entre lesdits coefficients de dilatation,
dans laquelle des moyens de chauffage (30, 32) commandés comportent des résistances électriques (30) réparties sur les surfaces des lames métalliques et en contact thermique avec elles, la différence d'élongation des deux lames, sous l'effet des moyens de chauffage, entraînant une courbure du panneau dans un sens tendant à réduire la section d'écoulement à la sortie de la tuyère, et
dans laquelle chaque panneau porte un capteur de déplacement (34) permettant d'évaluer la flexion des panneaux, les signaux émis par ces capteurs (34) étant exploités dans une boucle d'asservissement (36) configurée pour déterminer la valeur du courant à injecter dans les résistances (30) pour obtenir la flexion voulue des panneaux (16).

2. Tuyère selon la revendication 1, dans laquelle ledit matériau thermiquement isolant est un matériau composite, par exemple à base de carbone.

3. Tuyère selon l'une des revendications précédentes, dans laquelle chaque panneau (16) a une forme sensiblement trapézoïdale.

4. Tuyère selon l'une des revendications précédentes, dans laquelle lesdits panneaux (16) sont montés dans un espace annulaire (21) défini dans la paroi de ladite tuyère.

5. Tuyère selon la revendication 4, dans laquelle lesdits panneaux (16) sont dans la continuité de la face interne de ladite paroi lorsque lesdits moyens de chauffage commandés ne sont pas en service.

6. Turboréacteur à double flux comprenant une tuyère de soufflante selon l'une des revendications précédentes.

## Patentansprüche

1. Gebläsedüse mit einstellbarem Querschnitt, umfassend einen Kranz aus vorformbaren Platten (16), die in der Nähe ihrer Austrittskante angeordnet sind,
wobei jede Platte (16) eine zweilamellenartige Struktur umfasst, mit einem inneren Streifen (25) aus wärmeisolierendem Material und wenigstens einem äußeren Metallstreifen (26), wobei die Streifen unterschiedliche Ausdehnungskoeffizienten aufweisen und miteinander verbunden sind, damit eine Temperaturänderung eine Verformung der zweilamellenartigen Struktur bewirkt, die durch die Differenz zwischen den Ausdehnungskoeffizienten hervorgerufen wird,
wobei gesteuerte Heizmittel (30, 32) elektrische Widerstände (30) umfassen, die auf den Oberflächen der Metallstreifen verteilt und mit ihnen in Wärmekontakt sind, wobei die Dehnungsdifferenz der beiden Streifen unter der Wirkung der Heizmittel zu einer Krümmung der Platte in einer Richtung führt, die darauf abzielt, den Strömungsquerschnitt am Ausgang der Düse zu verringern, und
wobei jede Platte einen Wegsensor (34) umfasst, der ermöglicht, die Biegung der Platten zu bestimmen, wobei die durch diese Sensoren (34) ausgesandten Signale in einem Regelkreis (36) verwertet werden, der dazu ausgelegt ist, den Wert des in die Widerstände (30) einzuleitenden Stroms zu bestimmen, um die gewünschte Biegung der Platten (16) zu erreichen.

2. Düse nach Anspruch 1, wobei das wärmeisolierende Material ein Verbundwerkstoff, beispielsweise auf Kohlenstoffbasis ist.

3. Düse nach einem der vorhergehenden Ansprüche, wobei jede Platte (16) im Wesentlichen trapezförmig ist.

4. Düse nach einem der vorhergehenden Ansprüche, wobei die Platten (16) in einem in der Wand der Düse definierten ringförmigen Raum (21) angebracht sind.

5. Düse nach Anspruch 4, wobei die Platten (16) die Innenseite der Wand fortsetzen, wenn die gesteuerten Heizmittel nicht in Betrieb sind.

6. Zweistrom-Turboluftstrahltriebwerk, umfassend eine Gebläsedüse nach einem der vorhergehenden Ansprüche.

## Claims

1. An adjustable-section fan nozzle comprising a ring of deformable panels (16) arranged close to its trailing edge,
wherein each panel (16) comprises a dual-strip type structure comprising an inner strip (25) of thermally-insulating material together with at least one outer strip (26) of metal, said strips presenting different coefficients of expansion and being assembled one against another so that a variation in temperature induces deformation of said dual-strip type structure caused by the difference between said coefficients of expansion, and
wherein controlled heater means (30, 32) comprise electrical resistances (30) distributed over the surfaces of the metal strips and in thermal contact therewith, the difference in elongation of the two strips, under the effect of a rise in temperature, causes the panel to curve in a direction tending to reduce the flowsection at the outlet from the nozzle, and
wherein each panel carries a movement sensor (34) enabling the bending of the panels to be evaluated, the signals issued by the sensors (34) being used in a servo-control loop (36) configured to determine the amount of electric current to be injected into the resistances (30) in order to obtain the desired amount of bending for the panels (16).

2. A nozzle according to claim 1, wherein said thermally-insulating material is a composite material, e.g. based on carbon.

3. A nozzle according to any preceding claim, wherein each panel (16) is substantially trapezoidal in shape.

4. A nozzle according to any preceding claim, wherein said panels (16) are mounted in an annular space (21) defined in the wall of said nozzle.

5. A nozzle according to claim 4, wherein said panels (16) are continuous with the inside face of said wall when said controlled heater means are not in service.

6. A bypass turbojet, including a fan nozzle according to any preceding claim.
